# EUROPEAN PATENT APPLICATION

(11) **EP 2 878 203 A1**
(43) Date of publication of application: **03.06.2015**
(21) Application number: 13195056.0
(22) Date of filing: 29.11.2013
(51) Int. Cl.: A22C 17/00

(54) **A cutting apparatus and a method for cutting food products into smaller food products**

(71) Applicant: Marel A/S, 8200 Arhus N (DK)
(72) Inventor: Sørensen, Gorm, 3720 Aakirkeby (DK); Mikkelsen, Peter, 3740 Svaneke (DK)
(74) Representative: Olesen, Kaj

(57) **Abstract**

This invention relates to a cutting apparatus for cutting food objects into smaller food products, where the cutting apparatus includes an infeed conveyor having a first end and a second end, a conveyor system having a first end and a second end, the conveyor system being arranged such that the first end of the conveyor system is adjacent and essentially parallel to the second end of the infeed conveyor defining a first slit there between, and a first cutting unit having a cutting plane extending through the first slit and controlled by a control unit for cutting food objects conveyed by the infeed conveyor into smaller food products, wherein the first slit and the cutting plane of the cutting unit forms an angle to an axis perpendicular to the conveying direction.

## Description

### FIELD OF THE INVENTION

The present invention relates to a cutting apparatus and a method for cutting food objects into smaller food products.

### BACKGROUND OF THE INVENTION

WO2005097438 discloses a cutting apparatus for cutting food objects such as fish fillet, chicken breasts, deboned chicken legs etc. into portions having fixed shape, typically a rectangular shape. This cutting apparatus is based on utilizing two cutting devices arranged after each other where all the sides of the food objects are cut. The first cutting device acquires scanning data of incoming food products and based thereon cuts the food products into parallel food strips. These food strips are subsequently rotated manually 90° and conveyed through a second cutting device that cuts the food strips into plurality of squares.

This intermediate step of manually realigning the food strips for the subsequent cut requires, in addition to the extra labour needed, that the food products are stiff since otherwise the handling of the food strips would be much more difficult. The most logical solution to obtain such stiffness is to freeze the food products, e.g. by placing a freezing tunnel in front of the first cutting device. This is obviously not only a time demanding solution, but is also uneconomical.

One way of overcoming this problem is by using a water-jet cutter, since such a cutting device is capable of cutting the food objects in any size and shape. However, the operational costs of such a cutting device are high because it requires high pressure system and water source. Moreover, such water-jet cutter requires that the food objects are lying on a conveyor belt made of steel/metal, but such belts typically have large turning diameter meaning that it is very difficult, if not impossible to separate the individual portions, e.g. the rectangular portions, from each other.

The inventor of the present invention has appreciated that there is thus a need for an improved cutting apparatus and has in consequence devised the present invention.

### SUMMARY OF THE INVENTION

It is an object of embodiments of the invention to provide fully automatized and simplified cutting apparatus with higher throughput and that is more economical. In general, the invention preferably seeks to mitigate, alleviate or eliminate one or more of the above mentioned disadvantages of the prior art singly or in any combination. In particular, it may be seen as an object of embodiments of the present invention to provide a cutting apparatus that solves the above mentioned problems, or other problems.

To better address one or more of these concerns, in a first aspect of the invention a cutting apparatus is provided for cutting food objects into smaller food products, comprising:
- an infeed conveyor having a first end and a second end,
- a conveyor system having a first end and a second end, the conveyor system being arranged such that the first end of the conveyor system is adjacent and essentially parallel to the second end of the infeed conveyor defining a first slit there between, and
- a first cutting unit having a cutting plane extending through the first slit and controlled by a control unit for cutting food objects conveyed by the infeed conveyor into smaller food products,
wherein the first slit and the cutting plane of the cutting unit forms an angle to an axis perpendicular to the conveying direction.

The fact that the food objects are cut at an angle in relation to the conveying direction opens a possibility to make one or more subsequent cuts along one and the same conveyor system, whereas in case the food objects are cut perpendicular to the conveying direction the resulting smaller food products must always be removed from the conveyor system in order to make it possible to perform a subsequent cut.

By the term angle is meant an angle that is different from 90° in relation to the conveying direction.

In one embodiment, the cutting apparatus further comprises a first scanning device associated with the infeed conveyor for acquiring scanning data of incoming food objects on the infeed conveyor, where the acquired scanning data are used as a control data by the control unit for controlling the first cutting unit. The cutting apparatus may further comprise a tracking device such as a taco meter and the like to track the food items at all times such that the control unit that controls the first cutting unit is aware of the exact position of the food objects when starting the cutting process.

In one embodiment, the conveyor system comprises:
- a conveyor sub-system having a first end and a second end, and
- an outfeed conveyor having a first end and a second end, where the first end of the conveyor system is the first end of the conveyor sub-system, and where the second end of the conveyor sub-system is adj acent and essentially parallel to the first end of the outfeed conveyor and defines a second slit.

The second slit forms in one embodiment an angle in relation to the first slit, and where the cutting apparatus further comprises a second cutting unit controlled by a control unit having a cutting plane extending through the second slit.

It is thus possible to cut the incoming food objects into smaller food products, where the smaller food products are cut at all sides, automatically without any manual intervening. It follows thus that stiffness requirement of the incoming food objects, e.g. by freezing the food objects, is no longer required which makes the overall apparatus not only more economical, but also enhances the throughput of the apparatus.

The smaller food products may be, but is not limited to, any types of products that have fixed shapes where e.g. all the sides of the food products have been cut, but such fixed shapes may e.g. any types of forms such as rectangular forms, rhomboid forms, triangular forms etc.

The smaller food products may be considered as portions that e.g. fulfill a pre-defined target, such as, but not limited to, target weight.

The first and/or the second cutting units may be, but are not limited to sword type blade, linear moved blade, laser, water jet, ultrasonic etc.

The angle of the second slit in relation to the first slit is, in one embodiment, in the range between 70° and 110°, preferably between 80° and 100°, more preferably around 90°.

In one embodiment, the control unit is further adapted to generate a distance between the smaller food products by means of controlling the relative speed between the infeed conveyor and the conveyor system. This may e.g. be solved by means of starting and stopping the infeed conveyor subsequent to each cut while the conveyor system is running, or by slowing down the speed of the infeed conveyor subsequent to each cut, where the relative speed difference between the infeed conveyor and the conveyor system, which runs at higher speed, causes a spacing between adjacent smaller food products. Other solutions are inherently possible, such as by having the conveyor system run at higher speed, compared to the infeed conveyor, at all times. Accordingly, as will be discussed in more details later, such spacing between adjacent smaller food objects may be highly preferably for the subsequent cuts of the smaller food objects.

In one embodiment, the food objects are placed onto the infeed conveyor such that at least one side of the food objects is essentially parallel to the first slit. Assuming that the food objects are e.g. chicken breasts or deboned chick legs, the placement onto the infeed conveyor would preferably be such that one side of the chicken breasts or deboned chick legs are substantially parallel to the first slit. Thus, the first cut would result in that the smaller food objects are a plurality of parallel strips of food objects, in this case strips of poultry meat. The placement onto the infeed conveyor may be done manually, or it may be fully automatic via e.g. a robotic arm. The fact that the second cutting unit may be angled in relation to the first cutting unit, e.g. form an 90° angle in relation to the first cutting unit, it is possible to cut the parallel strips into smaller food products having rectangular shape.

Also, the fact that sufficient space is provided between adjacent smaller food objects, it is possible to cut each individual smaller food objects at a time, without cutting adjacent smaller food objects simultaneously. Thus, a very good control of the cutting is provided into the desired shape and/or portion.

In one embodiment, the conveyor sub-system comprises:
- a first conveyor having a first end and a second end, where the first end of the conveyor sub-system is the first end of the first conveyor, and
- a second conveyor having a first end and a second end, the first end of the second conveyor being positioned adjacent and essentially parallel to the second end of the first conveyor defining an intermediate slit where the intermediate slit is essentially parallel to the first slit, and where the second end of the conveyor sub-system is the second end of the second conveyor.

As already addressed, the control unit may in one embodiment be further adapted to generate a distance between the smaller food products at the first slit by means of controlling the relative speed between the infeed conveyor and the conveyor system, in this case to control the speed between the infeed conveyor and the first conveyor, so as the create a distance between adjacent smaller food objects.

In one embodiment, the conveying speed of the second conveyor is larger than the speed of the first conveyor. It is thus possible to enhance the space between adjacent smaller food products, e.g. the above mentioned food slices, before the subsequent cut is performed so as to ensure that adjacent smaller food products are not cut simultaneously.

The fact that the above mentioned intermediate slit is positioned between the first slit and the second slit is parallel to the first slit it is ensured that the additional distance created between the smaller food products at the increased distance transfer caused by the speed difference of the first conveyor and the second conveyor is "uniformly" transferred to the smaller food products. If e.g. the intermediate slit would not be parallel to the first slit, the smaller food products would most likely be shifted on the conveyor or tip over due to the speed difference between the firs and the second conveyors. However, due to this parallel arrangement this speed difference is applied on the smaller food products simultaneously.

In one embodiment, the angle of the second slit is shifted, in relation to the angle of the first slit, between 70° and 110°, preferably around 90°.

In one embodiment, the cutting apparatus further comprises a second scanning device associated with the conveyor sub-system or the first or the second conveyor for acquiring scanning data of the smaller food products, where the acquired scanning data of the smaller food products are used as a control data by the control unit for controlling the second cutting unit. It is thus possible to acquire detailed information about e.g. the position of the smaller food objects on the second conveyor before undergoing the second cut by the second cutting unit and thus the final cut of the food objects into the smaller food objects is fully controlled.

It should be noted that the second cutting unit may also be operated solely on the scanning data of the first scanning device, e.g. by tracking the position of the smaller food product.

In one embodiment, the cutting apparatus comprises an angle adjustment mechanism for adjusting the angle of the first slit and simultaneously the angle of the cutting plane such that the cutting plane is within the first slit at all times. The angle adjustment mechanism is in one embodiment operated by the control unit based on the acquired scanning data, where the controlling includes successively increasing or decreasing the angle of the first slit and the cutting plane while cutting a food product by the cutting unit such as between 30° and -30° in relation to the conveying direction. In one embodiment, the controlling includes successively increasing or decreasing the angle of the first slit and the cutting plane while cutting a food product by the cutting unit such that the resulting smaller food products fulfill a pre-determined target criterion such as a weight criterion.

An effective solution is thus provided to cut incoming food product into smaller food products, where the pre-determined target criterion may as an example be smaller food products of fixed target weight. The scanning data may e.g. include volumetric data and/or areal related data indicating the area of the incoming food products, which may e.g. be a fish fillet of any type, where this data is utilized as input data by the control unit in controlling the angle adjustment mechanism. As an example, the controlling may include how fast the angle of the angle adjustment mechanism is changed when e.g. adjusting it from 30° and -30° in relation to the conveying direction.

In one embodiment, the first and/or the second cutting unit is mounted to a tilting angle mechanism and where the control unit is further adapted to control the tilting angle of the cutting unit during the cutting. It is thus possible to cut the food objects into smaller food products that have more natural shape, e.g. similar as fish fillets or chicken breasts, where the cut sides are not necessarily vertical but may have varying inclinations,

It should be noted that the cutting plane of the first and or second cutting unit(s) lies extend through the first or the second slits, respectively. However, if needed, the position of the first and/or the second slit(s) may, if needed, may be adapted to the tilted cutting angle so as to avoid that the belt becomes damaged.

The conveyor system, and or the conveyor sub-system and/or the first and the second conveyor may be round belt conveyors comprising plurality of spaced apart round belt, where the round belt may be extending essentially parallel to the conveying direction. Moreover, the number of round belts may be such that the round belts form almost a continuous or semi continuous conveyor belts. The advantage of utilizing such round belt conveyors is that it is relative easy to create such an angles between adjacent conveyor or conveyor systems.

In a second aspect of the invention a method is provided of cutting food objects into smaller food products using a cutting apparatus which comprises:
- an infeed conveyor having a first end and a second end,
- a conveyor system having a first end and a second end, the conveyor system being arranged such that the first end of the conveyor system is adjacent and essentially parallel to the second end of the infeed conveyor defining a first slit there between, and
- a cutting unit having a cutting plane extending through the first slit and controlled by a control unit,
the method comprising the step of:
- cutting food objects conveyed by the infeed conveyor into smaller food products, wherein the first slit and the cutting plane of the cutting unit forms an angle to an axis perpendicular to the conveying direction.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
figures 1 and 2show a perspective view and a top view of one embodiment of a cutting apparatus according to the present invention for cutting food objects into smaller food products,
figures 3 and 4 show another embodiment of the cutting apparatus according to the present invention,
figures 5 and 6 show a perspective view and a top view of yet another embodiment of the cutting apparatus according to the present invention,
figure 7 shows a side view of figure 5(c) and 6(c),
figure 8 shows a zoomed of view of figure 5(d) and 6(d),
figure 9 shows an example of a fish fillet that has been cut into plurality of smaller food products,
figures 10 to 12 show a perspective view and a side view of one embodiment of a conveyor system that may be used in relation to any of the figures 1-8, and
figures 13 and 14 depict a perspective view and a side view of the conveyor system shown in figures 10 and 11, but where the cutting unit are wherein the first and/or the second cutting unit is mounted to a tilting angle mechanism.

### DESCRIPTION OF EMBODIMENTS

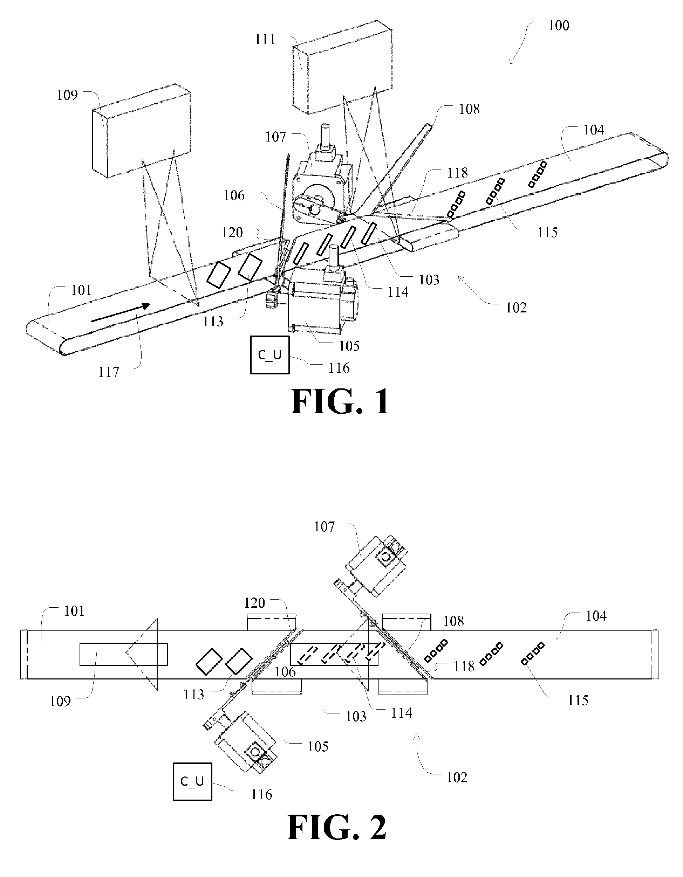

Figures 1 to 8 show one example of how to achieve the angled ends of the conveyors. In these figures the belt is a traditional flat belt that is "folded".

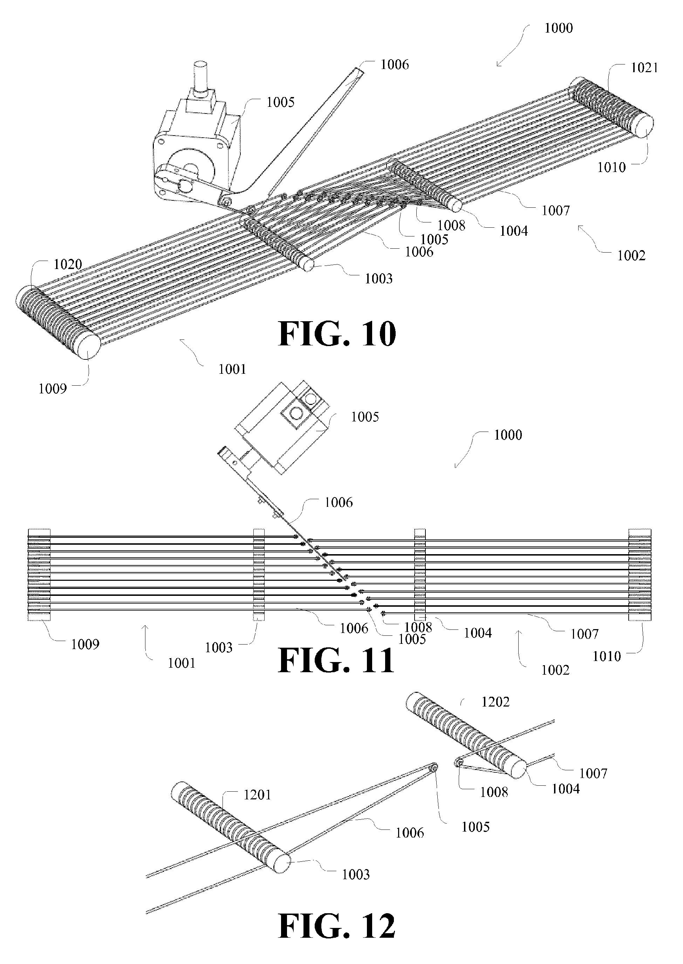

Figures 10 to 14 show another example on how to achieve the angled ends of the conveyors. In these figures the conveyors consist of multiple round belts spaced apart.

It should be noted that the present invention is not be considered to be limited to the above mentioned conveyors.

Figures 1 and 2 show a perspective view and a top view of one embodiment of a cutting apparatus 100 according to the present invention for cutting food objects 113 into smaller food products 114, 115. The cutting apparatus 100 comprises an infeed conveyor 101 having a first end and a second end, a first scanning device 109 associated with the infeed conveyor 101, a conveyor system 102 having a first end and a second end that is arranged such that a first end of the conveyor system 102 is adjacent and essentially parallel to the second end of the infeed conveyor 101 defining a first slit 120 there between. The first slit 120 forms an angle to an axis perpendicular to the conveying direction as indicated by the arrow 117.

The cutting apparatus 100 further comprises a first cutting unit 105 which may comprise a first sword blade 106 having a cutting plane extending through the first slit and controlled by a control unit 116 for cutting the food objects 113 conveyed by the infeed conveyor 101 into smaller food products 114.

As shown here, the conveyor system 102 comprises a conveyor sub-system 103, which in this embodiment is a single conveyor, having a first end and a second end, and an outfeed conveyor 104 having a first end and a second end. The first end of the conveyor sub-system 103 is the above mentioned end that is adj acent and essentially parallel to the second end of the infeed conveyor. The second end of the sub-conveyor system 103 is adjacent and essentially parallel to the first end of the outfeed conveyor and defines a second slit 118 that forms an angle in relation to the first slit 120.

The cutting apparatus 100 further comprises a second scanning device 111 associated with the sub-conveyor system 103, and a second cutting unit 107 controlled by a control unit, which may be the above mentioned control unit 116, comprising a second sword blade 108 having a cutting plane extending through the second slit 118. The angle of the second slit 118 in relation to the first slit 120 may be in the range between 70° and 110°, preferably between 80° and 100°, more preferably around 90°.

The functioning of the cutting apparatus 100 may in one embodiment be described in the following way: food objects 113 are placed onto the infeed conveyor 101, this may be done manually or be fully automatically using e.g. a robotic arm (not shown). Also, as depicted in here it may be preferred to place the food objects 113 under an angle such that one side of the food objects is substantially parallel to the first slit 120. The food objects 113 are conveyed by the infeed conveyor 101, where the scanning device acquires scanning data of the food objects 113, where the acquired scanning data are used as a control data by the control unit 116 for controlling the first cutting unit 105. The scanning data may as an example indicate the exact positioning of the food objects on the infeed conveyor 101, but other data may just as well be acquired such as the thickness profile, the colour of the food objects etc.

The cutting apparatus 100 may further comprise a tracking device (not shown) such as a taco meter and the like to track the food items at all times such that the control unit that controls the first cutting unit 105 is aware of the exact position of the food objects when starting the cutting process.

As shown here, the smaller food products 114 are in a form of parallel food strips 114, where there is a distance between adjacent food strips 114 so as to ensure that only one food strip will be cut at a time by the second cutting unit 107. One way of generating such a distance is by operating the relative speed between the infeed conveyor 101 and the conveyor sub-system 103 by the control unit 116. This may in one embodiment be done by means of stopping/starting the infeed conveyor 101 after each cut for a short time period (e.g. a fraction of a second) while the conveyor sub-system 103 is running, or by slowing the speed of the infeed conveyor 101 down for a short time period subsequent to each cut (e.g. a fraction of a second). Other options may be possible, such as by means of increasing the speed of the conveyor sub-system 103 subsequent to each cut, where the speed of the conveyor sub-system 103 is larger than that of the infeed conveyor 101.

The second scanning device 111 associated with conveyor sub-system 103 acquires scanning data of the parallel food strips 114 so as to determine the exact position of the food strips 114 on the conveyor sub-system 103, where based on this acquired scanning data the second cutting unit 107 cuts each respective food strip into smaller food products 115 having rectangular shape. The above mentioned tracking feature is preferably also provided so as to keep track of the position of the parallel strips 114 at all times.

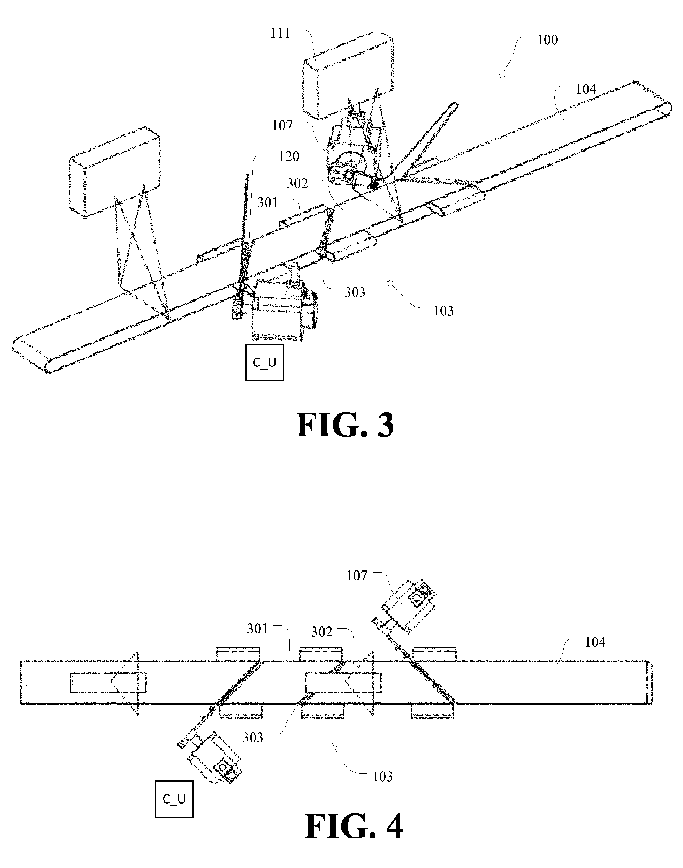

Figures 3 and 4 show a perspective view and a top view of the embodiment of the cutting apparatus 100 shown in figures 1 and 2, where in this embodiment the conveyor sub-system 103 comprises a first conveyor 301 having a first end and a second end, and a second conveyor 302 having a first end and a second end, where the first end of the second conveyor 302 is positioned adjacent and essentially parallel to the second end of the first conveyor 301 defining an intermediate slit 303, which as shown here is essentially parallel to the first slit 120.

The conveying speed of the second conveyor 302 may be larger than the speed of the first conveyor 301 so as to enhance the spacing between adjacent food strips (not shown here) further before arriving at the second cutting unit 107 to ensure that one food strip (smaller food product) is being cut at a time.

The fact that the above mentioned intermediate slit 303 is positioned between the first slit 120 and the second slit is parallel to the first slit 120 it is ensured that the additional distance created between the smaller food products at the increased distance transfer caused by the speed difference of the first conveyor 301 and the second conveyor 302 is "uniformly" transferred to the smaller food products. If e.g. the intermediate slit 303 would not be parallel to the first slit 120, the smaller food products would most likely be shifted on the conveyor or tip over due to the speed difference between the first conveyor 301 and the second conveyor 302. However, due to this parallel arrangement this speed difference is applied on the smaller food products simultaneously.

The second scanning device 111 is preferably associated to the second conveyor 302 to, as already addressed in relation to figures 1 and 2, to provide scanning related data used by the control unit 116 to control the second cutting unit 107.

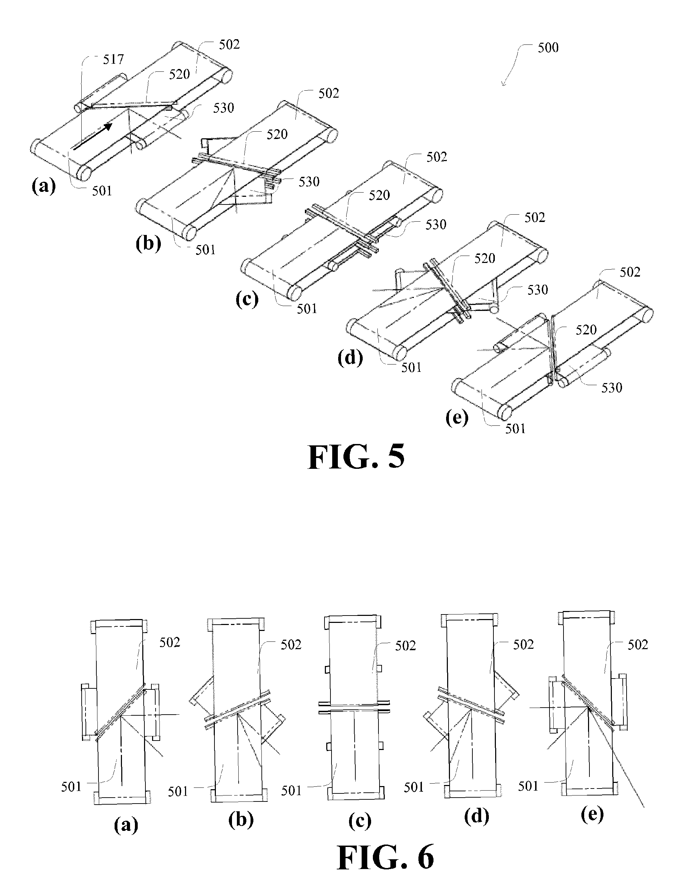

Figures 5 and 6 depict a perspective view and a top view of yet another embodiment of the cutting apparatus 500 according to the present invention, where the cutting apparatus comprises an infeed conveyor 501 and a conveyor system 502, where the conveyor system in this embodiment may be a single conveyor or an outfeed conveyor.

The cutting apparatus further comprises an angle adjustment mechanism 530, which will be discussed in more details later, for adjusting the angle of the first slit 520 and simultaneously the angle of the cutting plane such that the cutting plane of the first cutting unit (not shown) is within the first slit at all times.

The angle adjustment mechanism is operated by a control unit, e.g. the above mentioned control unit based on the acquired scanning data of a first scanning device (not shown), as discussed in relation to figures 1-4. The scanning data is utilized to control the cutting unit and the first slit 520 by means of increasing or decreasing the angle of the first slit and the cutting plane while cutting a food product by the cutting unit. As an example, figures 5 (a) and 6 (a) show where the starting angle of the first slit when starting cutting the food product (not shown) is approximately 45° in relation to the conveying direction 517 where the angle may be successively increased to 90° and further to 135°, in relation to the conveying direction 517 when cutting a food object such as a fish fillet.

The controlling may be based on cutting the food objects into two or more smaller food products that fulfill a pre-defined target such as weight target, dimensional related target which may include that all the smaller food products have similar width.

Different means may be provided to ensure that during cutting, the angle adjustment mechanism 530 does not become damaged, but this may depend on the cutting unit being used. If e.g. a water cutter is used as a cutting unit, any means such as elongate steel beam and the like may be arranged below the first slit 520. If the cutting unit is a cutting blade, it may be sufficient to have a sufficient distance between the infeed conveyor 501 and a conveyor system 502 and the angle adjustment mechanism 530.

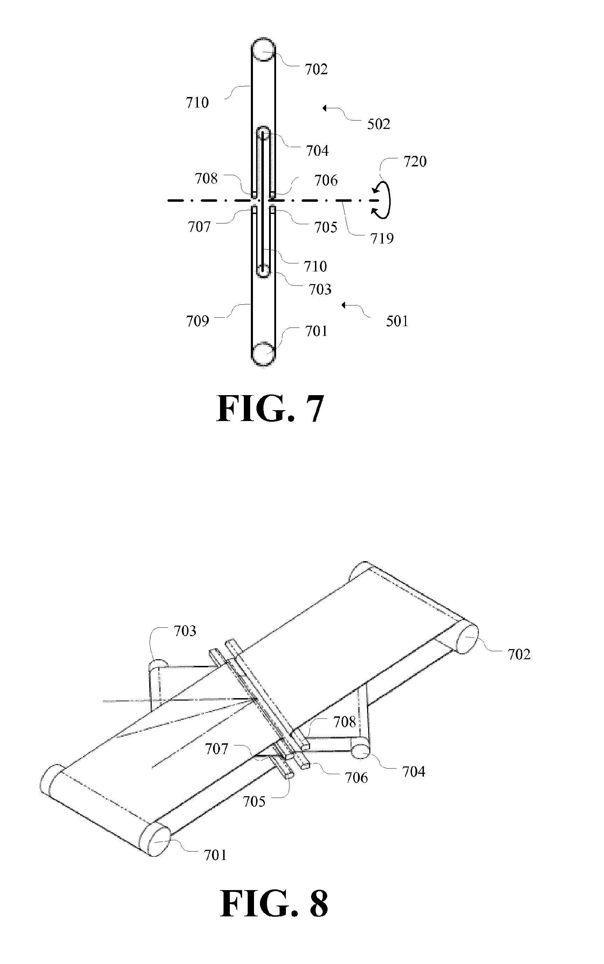

Figure 7 shows a side view of figure 5c and 6c showing where the infeed conveyor 501 and the conveyor system 502 form a 90° angle in relation to the conveying direction 517. The infeed conveyor 501 comprises an endless loop belt 709 extending between four rollers/bars 701, 705, 703, 707, and where the conveyor system 502 (which is a single conveyor) also comprises an endless loop belt 710 extending between four rollers/bars 702, 706, 704, 708. Rollers 701 and 702 may be rotors for driving the respective one of the conveyor belts 709, 710, whereas rollers 703, 704 may act as idle rollers, and where 705, 706, 707, 708 may be bars that are fixed.

The angle adjustment mechanism may comprise means for mounting rollers 703 and 704 internally fixed together via e.g. an elongated rod or rods extending between the rollers 703, 704, and a driving mechanism (not shown) that may be directly or indirectly mounted to the rod(s) (or a frame structure connected to the rod(s)) for allowing a rotational movement, as indicated by the arrow 720, of the rollers 703, 704 around rotational axis 719 in a controllable way based on the above mentioned scanning data.

Bars 705 to 708 may also be internally fixed together via e.g. similar rod(s), where bars 705 to 708 are also rotatable around rotation axis 719 such that the rotational movement of the rollers 703, 704 is followed by the rotational movement of the bars 705-708, which may be due to the increase in the belt tension of the belts 709, 710 when rotating the rollers 703, 704. This is illustrated graphically in figure 8, which shows enlarged view of figure 6(d).

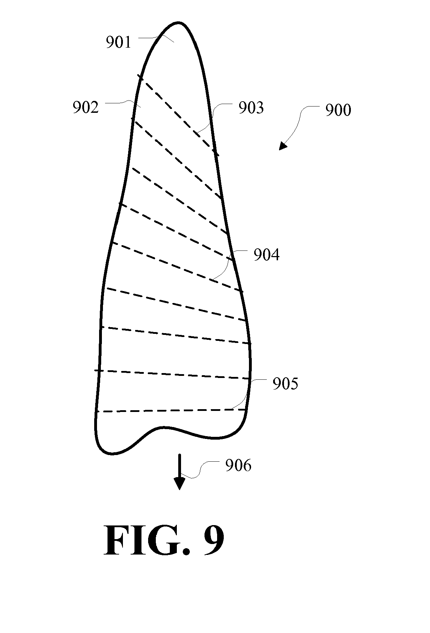

Figure 9 shows an example of a fish fillet that has been cut into a plurality of smaller food products 901, 902, where the cuts 903 to 905 through the food object 900 has different angles in relation to the conveying direction 906, starting in this example at 90° 905 and ending at 45° 903.

Figures 10 and 11 show a perspective view and a side view of an example of an embodiment of a conveyor system that may be used in relation to any of the figures 1-8 comprising a first conveyor 1001 and a second conveyor 1002, where these conveyors are so-called round belt conveyors comprising a plurality of spaced apart and endless loop round belts 1006, 1007, which may e.g. be made of rubber or any type of deformable material. The round belts may be of different length. The first conveyor comprises a roller 1009, which may act as a driving roller, and idle rollers 1003 and 1005, and the second conveyor 1002 comprises a roller 1010, which may act as a driving roller, and idle rollers 1004 and 1008.

The rollers 1003 and 1005, associated with the first conveyor 1001, and the rollers 1004 and 1008 associated with the second conveyor 1002 are shown in more details in figure 12, the idle rollers 1005 and 1008 may be considered as plurality of idle wheels. The rollers 1003 and 1004 comprise plurality of spaced apart grooves 1201 and 1202 circumferentially surrounding the rollers 1003, 1004. The plurality of round belts 1006, 1007 engage with these spaced apart grooves 1201, 1202, and with corresponding grooves 1020, 1021 circumferentially surrounding the driving rollers 1009, 1010, where the distance between adjacent grooves in rollers 1003 and 1004 is substantially the same as the distance between adjacent grooved 1020 and 1021 in the driving rollers. It is thus ensured that the round belts 1006, 1007 are propped in the rollers and do note slide sideways.

This embodiment also shows a cutting unit 1005 comprising a sword type blade 1006, but a scanning device e.g. as discussed previously in relation to figures 1-8 is not shown here.

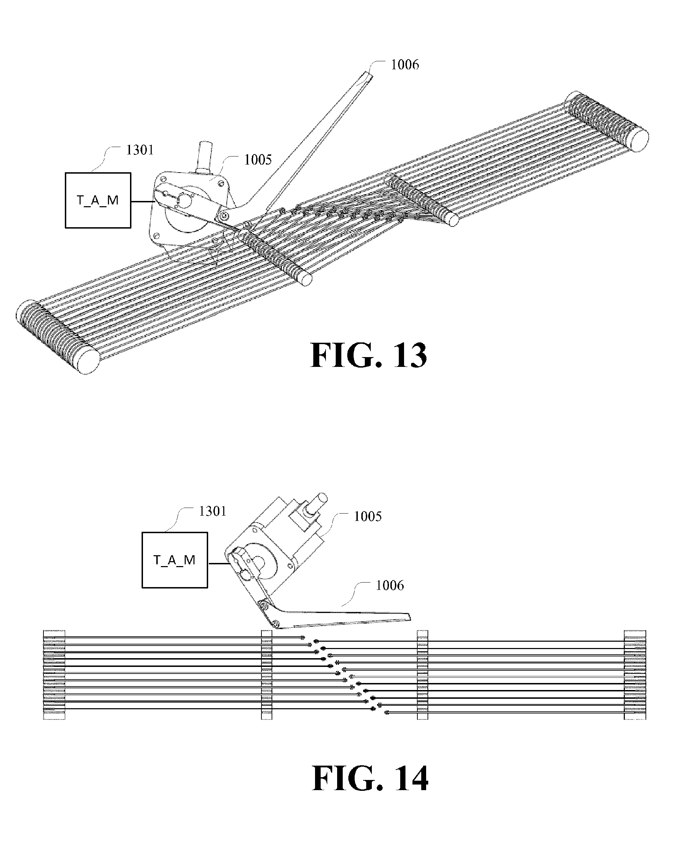

Figures 13 and 14 depict a perspective view and a side view of the conveyor system shown in figures 10 and 11, but where the cutting unit are wherein the first and/or the second cutting unit is mounted to a tilting angle mechanism (T_A_M) 1301. It is thus possible to cut the food objects into smaller food products that have more natural shape, e.g. similar as fish fillets or chicken breasts, where the cut sides are not necessarily vertical but may have varying inclinations.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A cutting apparatus (100) for cutting food objects (113) into smaller food products (114, 115), comprising:
• an infeed conveyor (101) having a first end and a second end,
• a conveyor system (102) having a first end and a second end, the conveyor system being arranged such that the first end of the conveyor system is adjacent and essentially parallel to the second end of the infeed conveyor defining a first slit (120) there between, and
• a first cutting unit (105) having a cutting plane extending through the first slit and controlled by a control unit (116) for cutting food objects, conveyed by the infeed conveyor, into smaller food products,
wherein the first slit (120) and the cutting plane of the cutting unit forms an angle to an axis perpendicular to the conveying direction (117).

2. The cutting apparatus according to claim 1, further comprising a first scanning device (109) associated with the infeed conveyor (101) for acquiring scanning data of incoming food objects (113) on the infeed conveyor, where the acquired scanning data are used as a control data by the control unit (116) for controlling the first cutting unit.

3. The cutting apparatus according to claim 1 or 2, wherein the conveyor system (102) comprises:
• a conveyor sub-system (103) having a first end and a second end, and
• an outfeed conveyor (104) having a first end and a second end, where the first end of the conveyor system is the first end of the conveyor sub-system, and where the second end of the conveyor sub-system is adj acent and essentially parallel to the first end of the outfeed conveyor and defines a second slit (118).

4. The cutting apparatus according to claim 3, wherein the second slit (118) forms an angle in relation to the first slit (120), and where the cutting apparatus further comprises a second cutting unit (107) controlled by a control unit having a cutting plane extending through the second slit.

5. The cutting apparatus according to any of the claims 3 to 4, wherein the conveyor sub-system (103) comprises:
• a first conveyor (301) having a first end and a second end, where the first end of the conveyor sub-system is the first end of the first conveyor, and
• a second conveyor (302) having a first end and a second end, the first end of the second conveyor being positioned adjacent and essentially parallel to the second end of the first conveyor defining an intermediate slit (303) where the intermediate slit is essentially parallel to the first slit (120), and where the second end of the conveyor sub-system is the second end of the second conveyor.

6. The cutting apparatus according to any of the preceding claims, wherein the control unit (116) is further adapted to generate a distance between the smaller food products by means of controlling the relative speed between the infeed conveyor (101) and the conveyor system (102).

7. The cutting apparatus according to any of preceding claims, wherein the angle of the second slit is shifted, in relation to the angle of the first slit, between 70° to 110°, preferably around 90°.

8. The cutting apparatus according to claim 5, 6 or 7, wherein the conveying speed of the second conveyor (302) is larger than the speed of the first conveyor (301).

9. The cutting apparatus according to any of the claims 3 to 8, further comprising a second scanning device (111) associated with the conveyor sub-system (103) or the first or the second conveyor for acquiring scanning data of the smaller food products, where the acquired scanning data of the smaller food products are used as a control data by the control unit for controlling the second cutting unit.

10. The cutting apparatus according to any of the preceding claims, further comprising an angle adjustment mechanism (530) for adjusting the angle of the first slit (520) and simultaneously the angle of the cutting plane such that the cutting plane is within the first slit at all times.

11. The cutting apparatus according to claim 10, wherein the angle adjustment mechanism (530) is operated by the control unit based on the acquired scanning data, where the controlling includes increasing or decreasing the angle of the first slit and the cutting plane while cutting a food product by the cutting unit such as between 30° and -30° in relation to the conveying direction.

12. The cutting apparatus according to claim 10 or 11, where the controlling includes successively increasing or decreasing the angle of the first slit (520) and the cutting plane while cutting a food product by the cutting unit such that the resulting smaller food products fulfill a pre-determined target criterion such as a weight criterion.

13. The cutting apparatus according to any of the preceding claims, wherein the first and/or the second cutting unit is mounted to a tilting angle mechanism.

14. A method of cutting food objects into smaller food products using a cutting apparatus which comprises:
• an infeed conveyor having a first end and a second end,
• a conveyor system having a first end and a second end, the conveyor system being arranged such that the first end of the conveyor system is adjacent and essentially parallel to the second end of the infeed conveyor defining a first slit there between, and
• a cutting unit having a cutting plane extending through the first slit and controlled by a control unit,
the method comprising the step of:
• cutting food objects conveyed by the infeed conveyor into smaller food products, wherein the first slit and the cutting plane of the cutting unit forms an angle to an axis perpendicular to the conveying direction.
